# EUROPEAN PATENT SPECIFICATION

(11) **EP 4 622 453 B1**
(45) Date of publication and mention of the grant of the patent: **11.11.2026**
(21) Application number: 23813493.6
(22) Date of filing: 17.11.2023
(51) Int. Cl.: A01K 1/12

(54) **SAFETY ARRANGEMENT FOR A ROTARY MILKING PARLOUR AND A ROTARY MILKING PARLOUR COMPRISING SUCH A SAFETY ARRANGEMENT**
SICHERHEITSANORDNUNG FÜR EINEN MELKKARUSSELL UND MELKKARUSSELL MIT SOLCH EINER SICHERHEITSANORDNUNG
AGENCEMENT DE SÉCURITÉ POUR SALLE DE TRAITE ROTATIVE ET SALLE DE TRAITE ROTATIVE COMPRENANT UN TEL AGENCEMENT DE SÉCURITÉ

(30) Priority: 24.11.2022 SE 2251372
(43) Date of publication of application: 01.10.2025
(73) Proprietor: DeLaval Holding AB, 147 21 Tumba (SE)
(72) Inventor: KOSTEK, Ryszard, 147 21 Tumba (SE); LEDZION, Emanuel, 147 21 Tumba (SE); MAZGAJ, Miroslaw, 147 21 Tumba (SE); TRZNADEL, Jacek, 147 21 Tumba (SE); ZAWISLANSKI, Tomasz, 147 21 Tumba (SE)
(74) Representative: DeLaval International AB
(86) International application number: PCT/SE2023/051162
(87) International publication number: WO 2024/112244

(56) References cited:
- FR-A1- 2 958 115
- GB-A- 2 486 903
- US-B2- 8 468 971

## Description

### TECHNICAL FIELD

The invention relates to a safety arrangement for a rotary milking parlour. Specifically, the invention relates to a safety arrangement comprising a safety switch device for protecting humans and/or dairy animals during operation of the rotary milking parlour, and to a rotary milking parlour comprising such a safety arrangement.

### BACKGROUND

Rotary milking parlours comprises a rotary platform with a plurality of milking stalls where dairy animals are milked and a stationary bridge for allowing the dairy animals to enter and exit the rotary platform while it is rotating. The stationary bridge is situated close to the rotary platform so that the dairy animals can step safely over a narrow gap and onto the rotary platform and back again after milking.

The rotary platform and the stationary bridge are elevated with respect to a relatively wide worker area next to the rotary platform where dairy workers may be located for performing a pre-treatment of the dairy animals (e.g., cleaning the teats on the dairy animals), attaching (and possibly also detaching) milking clusters to the dairy animals, performing a post-treatment (disinfecting teats after milking) and generally monitoring the milking of the dairy animals. Between the worker area and the narrow gap between the stationary bridge and the rotary platform is a hazardous transition region. This transition region is hazardous because the dairy workers, who spend time around and near the rotary platform, must be careful that their bodies and extremities are not pulled inadvertently into the narrow gap between the rotary platform and the stationary bridge. The transition region is also a critical location because after a milking process, a milking cluster may be dropped down into a lowered position to hang outside the circumferential edge of the rotary milking platform. The milking cluster may hang from a cord or chain and the milking cluster are hereby required to drop down properly with their cords/chains passing into the gap without the milking clusters getting stuck, damaged and/or their cords/chains becoming worn down over time. The milking clusters further includes milk hoses that may be required to pass into the gap without getting stuck.

To solve these problems, different safety switch devices have already been developed. Thus, it is known that a safety switch device designed as an emergency stop switch can be arranged in the critical transition region with which the movement of the rotary platform can be stopped immediately.

One such safety switch device is known from US 8 468 971 B2, which discloses a safety switch device for a rotary platform with a stationary bridge, and a gap arranged between the rotary platform and the stationary bridge. The safety switch device comprises a movable switching paddle and a signalling device on the switching paddle for triggering an emergency stop or alarm function. The switching paddle is designed and mounted in such a way that the distance to the outside peripheral edge of the rotary platform increases toward a free end of the switching paddle.

A problem that has not yet been fully addressed in the prior art is the safety of the dairy animals. In view of the limited space on and around the stationary bridge and the stressful situations that may arise, when the dairy animals are about to enter or leave the milking stalls of the rotary platform, accidents may occur if the dairy animals accidentally step outside the rotary platform at the stationary bridge.

It would therefore be advantageous to achieve a safety arrangement overcoming, or at least alleviating, this drawback of the prior art.

### SUMMARY OF THE INVENTION

It is an object of the invention to provide a safety arrangement for a rotary milking parlour in which the safety of both the dairy animals and the dairy workers is addressed. This object is achieved by the invention according to the independent claim.

According to claim 1, the invention relates to a safety arrangement for a rotary milking parlour comprising:
- a rotary platform with a plurality of milking stalls,
- a stationary bridge for allowing dairy animals to enter and exit the rotary platform before and after milking, and a gap provided between the rotary platform and the stationary bridge, wherein the safety arrangement comprises a safety switch device configured to be positioned adjacent to the gap and adjacent to both the rotary platform and the stationary bridge for protecting humans and/or the dairy animals during operation of the rotary platform,

wherein the safety switch device comprises
   - a stepping surface configured to support dairy animals that accidentally step outside the rotary platform,
   - a support structure that carries the stepping surface and is pivotally arranged about a pivot axis at a lower part of the support structure, wherein the pivot axis allows a pivotal movement about a horizontal axis so as to allow the support structure with the stepping surface to pivot away from the rotary platform alongside the stationary bridge, and
wherein the safety switch device further comprises a sensor device arranged to activate an emergency stop of the rotary platform when a pivotal movement of the support structure with the stepping surface about the pivot axis away from the rotary platform is detected by the sensor device.

With the inventive solution the dairy animals on the rotary platform and the human operators working in an area next to the rotary platform are protected from accidentally entering the gap between the rotary platform and the stationary bridge. Thus, the stepping surface of the safety switch device provides a safety support structure for the dairy animals that accidentally may step outside the rotary platform when moving close to the hazardous region between the rotary platform and the stationary bridge. The stepping surface is hereby configured to support - at least a hoof of - the dairy animal that accidentally steps outside the rotary platform in the hazardous transition region to prevent the dairy animal from being seriously injured by their hoof/leg getting stuck in the gap between the rotary platform and the stationary bridge. Moreover, if a human operator is caught by the rotary platform or the dairy animal steps outside the rotary platform before the stepping surface, the support structure will be caused to pivot away from the rotary platform by the human or the leg of the dairy animal, whereby the sensor device activates the emergency stop to prevent any serious injury of the human or dairy animal. The safety switch device also provides a safety barrier to prevent that the operators come too close to the gap between the rotary platform and the stationary bridge.

In an embodiment of the invention, the stepping surface of the safety switch device has
- a front side arranged to face a circumferential edge of the rotary platform,
- a first lateral side arranged to face the stationary bridge,
- a second lateral side opposed to the first lateral side,
   wherein the second lateral side is inclined so as to form an angle of less than 90 degrees, preferably in a range of 80 degrees to 60 degrees, with respect to an imaginary extension of the front side as seen in a plane of the stepping surface.

In other words, in a non-pivoted (non-activated) state of the safety switch device, the stepping surface is extending in a (horizontal) plane next to the rotary platform and the stationary bridge. Thus, when the safety switch device is arranged at the rotary milking parlour with its front side facing the rotary platform, the second lateral side is inclined so as to form an angle of less than 90 degrees, preferably in a range of 80 degrees to 60 degrees, with respect to tangent of a circumferential edge of the rotary platform at an intersection thereof with the second lateral side as seen in the (horizontal) plane of the stepping surface.

The inclination of the second lateral side serves several purposes. The inclination will hereby promote an outward pivotal movement of the support structure so as to activate the emergency stop of the rotary platform if an operator, an animal leg or any other item exerts a pushing force towards the second lateral side of the stepping surface of the safety switch device, i.e., the lateral side that is positioned farthest from the gap. Moreover, the inclination of the second lateral side will also guide any cord/chain of a milking cluster (hanging in the cord/chain) during a cluster drop and/or guide any milk hoses of the milking clusters into the gap between the stationary bridge and the rotary platform, whereby the service life of the cord/chain or milk hoses are improved.

In an embodiment of the invention, the front side of the stepping surface is arranged at a distance of less than 75 mm from the circumferential edge of the rotary platform, preferably less than 55 mm.

The distance between the front side and the circumferential edge should preferably be of the same magnitude as the gap between the rotary platform and the stationary bridge, which conventionally is less than 75 mm from the circumferential edge of the rotary platform, preferably less than 55 mm and often about 45 mm. The distance should hereby be smaller than the size of a leg or hoof of a dairy animal to prevent that the leg/hoof enters the gap, but sufficiently big to allow trouble free passing of milk hoses and/or cords/chains holding the milking clusters.

In a further embodiment of the invention, both the first lateral side and the second lateral side are inclined, as seen in the plane of the stepping surface, such that the front side of the stepping surface is narrower than a mid-portion thereof.

Specifically, the stepping surface may be mirror-symmetrical in relation to a vertical mid-plane of the stepping surface, wherein the first lateral side and the second lateral side are inclined at the same angle, as seen in the plane of the stepping surface, in relation to an imaginary extension of the front side.

The fact that both the first lateral side and the second lateral side are inclined in this manner provides for the possibility to position the safety switch device on either or both sides of the stationary bridge. In other words, one and the same safety switch device may be located on the left and/or right side of the stationary bridge with the retained benefits of the previously described embodiment. The same safety switch device may hereby also be positioned on a preferred (exit) side of the stationary bridge regardless of the rotary milking parlour being configured for a clockwise or counterclockwise rotation with the retained benefits of the previously described embodiment. The safety switch device is preferably located on the exit side of the stationary bridge, but it may also be located on an entry side of the stationary bridge and provide improved safety in situations when an operator of the rotary parlour decides to run the rotary platform in a reverse direction.

In an embodiment of the invention, the safety arrangement further comprises a bridge compensator arranged to be positioned on a lateral side of the stationary bridge in a space formed between the stationary bridge and the first lateral side of the stepping surface, which bridge compensator comprises an auxiliary stepping surface to support the dairy animals if accidentally stepping in said space.

The bridge compensator is especially advantageous for rotary milking parlours where the stepping surface of the safety switch device is inclined on both sides and where the stationary bridge is not shaped to accommodate the safety switch device without giving rise to an open space between the animal bridge and the first lateral side of the stepping surface. This embodiment is specifically useful when the safety switch device is installed in existing rotary milking parlours where the existing stationary bridge is not adapted to the proposed design of the safety switch device.

In embodiments of the invention the stepping surface of the safety switch device comprises openings arranged at a front portion of the stepping surface adjacent the front side thereof, to allow manure to pass through the stepping surface.

It is important to keep the stepping surface and the working area in the rotary milking parlour tidy. Therefore, openings are useful to allow manure from the dairy animals to pass down from the stepping surface to minimise the amount of manure on said stepping surface.

In specific embodiments the front portion of the stepping surface is formed of spaced apart horizontal bars.

In an embodiment of the invention, a back portion of the stepping surface, at a distance further away from the rotary platform than the front portion, comprises a perforated steel plate, preferably including raised perforations for increased friction and slip resistance. In this way the stepping surface is well adapted to the function of a stepping surface if a cow accidentally slips or steps outside the extension of the front portion of the stepping surface. The back portion is positioned farther away from the dairy animals and is not exposed to manure in the same manner as the front portion, such that it may be comprised of a functional perforated stepping steel plate providing support and slip resistance if the dairy animal would step or slip past the front portion of the stepping surface.

In embodiments of the invention the sensor device is a (non-optical) proximity sensor device, which comprises a sensor arranged to detect the presence of a sensor target, of which one (preferably the sensor) is stationary arranged at a base of the safety switch device and the other (preferably the sensor target) is arranged on the support structure, wherein the support structure is pivotally connected to the base at a pivot joint forming the pivot axis.

This type of proximity sensor device (such as a magnetic, a capacitive or an inductive proximity sensor) is advantageous as it remains unaffected by dirt/manure/water and provides a long and reliable service life. The proximity sensor also allows an immediate recognition of a movement of the support structure when the sensor target no longer is within reach for the sensor so as to allow an almost instant emergency stop of the rotary platform when an incident is at hand.

In embodiments of the invention the pivot axis of the support structure is arranged at a horizontal distance from the rotary platform, wherein at least a major portion of the stepping surface is positioned closer to the rotary platform in a horizontal direction than the pivot axis, such that a weight acting on top of said major portion will not provoke a pivotal motion of the support structure.

This is advantageous as it provides a stable stepping support for the dairy animals without risking a tilting of the stepping surface and that their steps will provoke an unwanted emergency stop.

In embodiments of the invention the stepping surface extends horizontally from an upper end of the support structure towards the rotary platform. This is a preferable way of achieving a stepping support that may be stepped upon without triggering an emergency stop.

Specifically, in embodiments of the invention the stepping surface extend at a substantially right angle with respect to the support structure and wherein the support structure extends substantially vertically from a base of the safety switch device.

Also, to further inform the operator of the rotary milking parlour, a warning signal may be produced when the emergency stop is initiated to indicate that the support structure is out of position and that an emergency is at hand. Such indication may be set according to functional conditions and, to a certain degree preferences, and may comprise light signals and/or sound alerts.

A further embodiment relates to a rotary milking parlour comprising:
- a rotary platform with a plurality of milking stalls,
- a stationary bridge for allowing dairy animals to enter and exit the rotary platform before and after milking, wherein a gap is provided between the rotary platform and the stationary bridge, and a safety arrangement comprising a safety switch device positioned adjacent to the gap and adjacent to both the rotary platform and the stationary bridge for protecting humans and/or the dairy animals during operation of the rotary platform, characterised in that the rotary milking parlour hereby comprises the safety switch device according to the invention or any one of the preceding embodiments of the invention.

In an embodiment of the milking parlour the stationary bridge comprises an entry side arranged to allow entry of the dairy animals to the rotary platform and an exit side for allowing exiting of the dairy animals, and wherein the safety switch device is arranged adjacent to the exit side of the stationary bridge.

A positioning of the safety switch device adjacent to the exit side of the stationary bridge is advantageous as it is thereby positioned at the point where the rotary platform - in normal forward operation - rotates towards the stationary bridge, and specifically towards the gap between the rotary platform and the stationary bridge, thereby preventing incidents with human or animal limbs entering said gap on the exit side of the stationary bridge. However, further enhanced safety is evidently achieved if a further safety switch device is also located adjacent the entry side of the stationary bridge. This prevents incidents with humans or animal limbs entering said gap also in situations when the operator of the rotary milking parlour for some reason desires to temporarily stop and bring the rotary platform in a reverse direction opposite to the normal forward rotation. Other embodiments and advantages will be apparent from the detailed description and the appended drawings.

### BRIEF DESCRIPTION OF THE DRAWINGS

Below, specific embodiments of the invention will be described with reference to the appended drawings, of which:
- Fig. 1: is a perspective view of a rotary milking parlour with a safety arrangement according to an embodiment of the invention,
- Fig. 2: is a perspective view of a safety switch device in a safety arrangement in accordance with an embodiment of the invention,
- Fig. 3: is a top view of the safety switch device shown in Fig. 2,
- Fig. 4: is a side view of the safety switch device in an initial position,
- Fig. 5: is a side view of the safety switch device in a slightly tilted position,
- Fig. 6: is a side view of the safety switch device in a fully tilted position,
- Fig. 7: is a perspective view of the base of a safety switch device,
- Fig. 8: is a top view of a safety switch device and a bridge compensator, and
- Fig. 9: is a top view of a safety switch device and an alternative bridge compensator.

### DETAILED DESCRIPTION OF THE SHOWN EMBODIMENTS

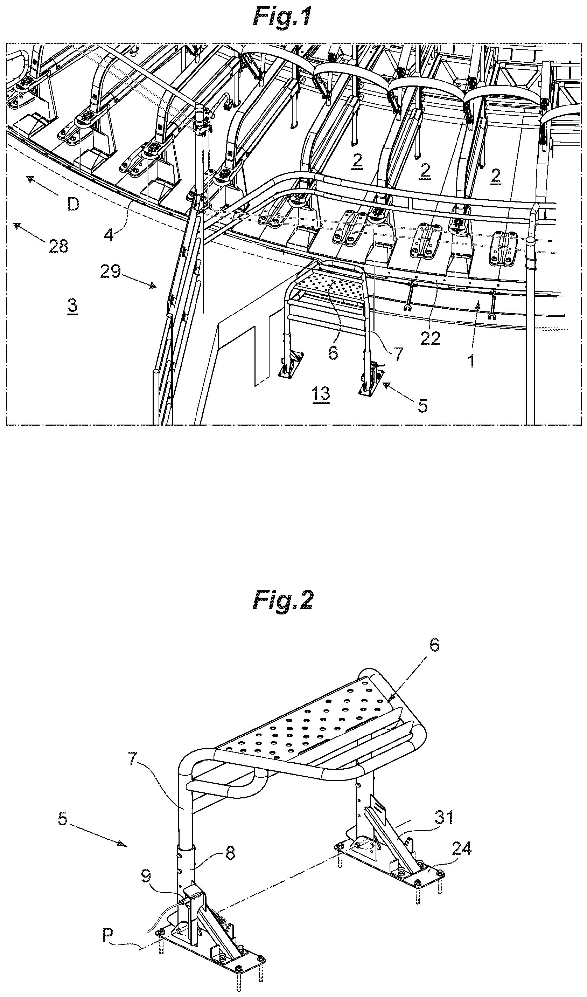

In Fig. 1 a rotary milking parlour with a safety arrangement according to an embodiment of the invention is shown.

The rotary milking parlour comprises a rotary platform 1 with a plurality of milking stalls 2. A stationary bridge 3 for allowing animals to enter and exit the rotary platform 1 is arranged with a gap 4 between a circumferential edge 22 of the rotary platform 1 and the stationary bridge 3. In the drawing, the rotary platform 1 is arranged, during a normal milking operation, to rotate in a clockwise direction as illustrated by an arrow D in Fig. 1.

The safety arrangement comprises a safety switch device 5 arranged at an area 13 where dairy workers may be positioned during operation. Specifically, the inventive safety switch device 5 may hereby be arranged to protect both the dairy workers and the dairy animals during a milking session.

The safety switch device 5 is arranged adjacent to both the rotary platform 1 and the stationary bridge 3 for protecting dairy animals from the gap 4 when entering and/or exiting the rotary platform 1 via the stationary bridge 3. In the shown embodiment the stationary bridge comprises an entry side 28 (to the left in the drawing) for allowing the dairy animals to enter the rotary platform 1 and an exit side 29 (to the right in the drawing) for allowing the dairy animals to leave the rotary platform 1. In the shown embodiment the safety switch device 5 is arranged adjacent to the exit side 29 of the stationary bridge 3.

As is illustrated in the drawing, the rotary platform 1 and the stationary bridge 3 are elevated to a similar height above the operator area 13, allowing the dairy workers to stand up and perform their tasks such as handling of milking clusters at a comfortable height.

The safety switch device 5 is shown in more detail in Fig. 2 and comprises a stepping surface 6 elevated to the same height as the rotary platform 1 and the stationary bridge 3. The stepping surface 6 is configured to support a dairy animal that accidentally steps outside the rotary platform when exiting the rotary platform 1.

The stepping surface 6 is carried by a support structure 7, which is pivotally arranged about a pivot axis P at a lower part 8 of the support structure 7, wherein the pivot axis P allows a pivotal movement about a horizontal axis so as to allow the stepping surface 6 of the safety switch device 5 to pivot in a direction away from the rotary platform 1. In the shown embodiment the support structure 7 is comprised of two spaced apart legs, each leg being pivotally arranged at a respective base support 24.

A lower part 8 of the support structure 7 comprises a support strut 31, preferably one at each leg of the support structure 7, that extend downwards at an angle towards the rotary platform 1 to provide a support that abuts a front portion of the base support 24. The support strut 31 is arranged to support the leg of the support structure 7 when a weight of the dairy animal is acting on the stepping surface 6 of the safety switch device 5, wherein the support strut 31 may rest on the base support 24 to provide a counter force to the applied weight. The pivot axis is formed by two pivot joints 27 that allows the support structure 7 to pivot with respect to the base support 24. Each leg of the support structure 7 thereby comprises a pivot joint 27, wherein the horizontal pivot axis P runs through both pivot joints 27.

The safety arrangement further comprises a proximity sensor device 9 arranged to activate an emergency stop of the rotary platform 1 when a pivotal movement of the support structure 7 with the stepping surface 6 around the pivot axis P, away from the rotary platform 1, is detected by the proximity sensor device 9. The proximity sensor in the shown embodiment is an inductive proximity sensor device 9. The pivotal movement of the support structure 7 may hereby also activate an alert signal to inform the operator of the emergency stop.

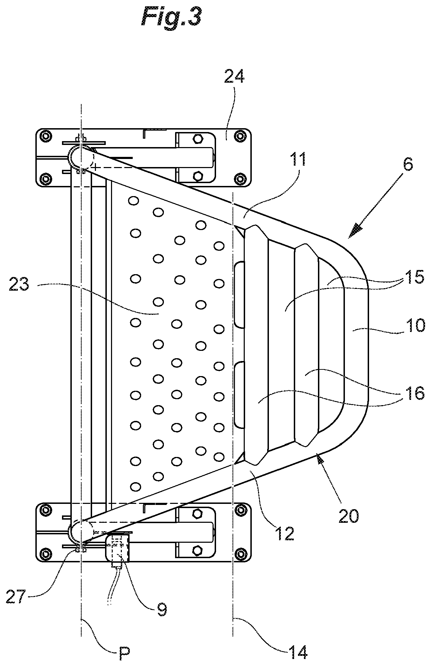

As is illustrated in Fig. 3, the stepping surface 6 of the safety switch device 5 has a front side 10 arranged to face a circumferential edge 22 of the rotary platform 1, a first lateral side 11 arranged to face the stationary bridge 3, and a second lateral side 12 opposite to the first lateral side 11 and arranged to face away from the stationary bridge towards the operator area 13. The front side 10 is preferably configured with a length extension corresponding to a required safety braking distance on the rotary platform 1. Thus, if the emergency stop is activated and the rotary platform 1 is designed to stop within 350 mm, the front side 10 has an extension (length) of at least 350 mm.

The stepping surface 6 of the safety switch device 5 preferably comprises openings 15 arranged to allow dirt/manure and water/liquid to pass by the stepping surface 6. Specifically, a front portion 20 of the stepping surface 6 of the safety switch device 5 is hereby formed of horizontal bars 16 with openings 15 between them. The openings 15 shall be small so as to not allow the dairy animal to step through them but big enough to allow manure to pass through them.

In the shown embodiment a back portion 23 of the stepping surface 6, at a distance further away from the rotary platform 1 than the front portion 20, is formed of a perforated friction steel plate that is well adapted to the function of a stepping surface if a cow accidentally steps or slips outside the extension of the front portion 20. In view of that the back portion 23 is positioned farther away from the dairy animals and less exposed to manure, it may not need to be provided with the same sized openings as the front portion 20.

As can be seen in Figs. 2 and 3, the second lateral side 12 of the stepping surface 6 is inclined so as to form an angle of less than 90 degrees with respect to an imaginary extension of the front side 10 as seen in a plane of the stepping surface 6. In other words, the second lateral side 12 is forming an acute angle with a tangent of the circumferential edge of the rotary platform 1 at an intersection thereof with the second lateral side 12 as seen in a horizontal plane of the stepping surface 6. This angle of less than 90 degrees, is preferably in a range of 80 degrees to 60 degrees, and will, when a dairy worker, dairy animal, or any other object follows the rotary movement of the rotary platform 1 and exerts a force in the tangential direction of the rotary platform's direction D of rotation, force the safety switch device 5 outwards, away from the rotary platform 1. In the shown embodiment, the angle is approximately 70 degrees.

When the safety switch device 5 is forced away from the rotary platform 1, the pivoting or tilting movement of the safety switch device 5 will be detected by the sensor device 9 such that an emergency stop will be activated.

In the shown embodiment both the first lateral side 11 and the second lateral side 12 of the stepping surface 6 of the safety switch device 5 are inclined, as seen in the plane of the stepping surface 6, such that the front side 10 is narrower than a mid-portion 14 of the stepping surface 6. More precisely, the first lateral side 11 and second lateral side 12 are mirror-symmetrical in relation to a vertical mid-plane of the stepping surface 6, wherein both the first lateral side 11 and the second lateral side 12 extend at an angle of approximately 70 degrees with respect to the imaginary extension of the front side 10. Thereby, the safety switch device 5 may be positioned at either side of the stationary bridge 3, depending on in which direction the rotary platform 1 is configured to rotate during a normal (milking) operation of the rotary milking parlour. Specifically, the safety switch device 5 of the embodiment is positioned next to the exit side 29 of the stationary bridge 3. However, a further safety switch device 5 of the embodiment may also be located next to the entry side 29 of the stationary bridge 3.

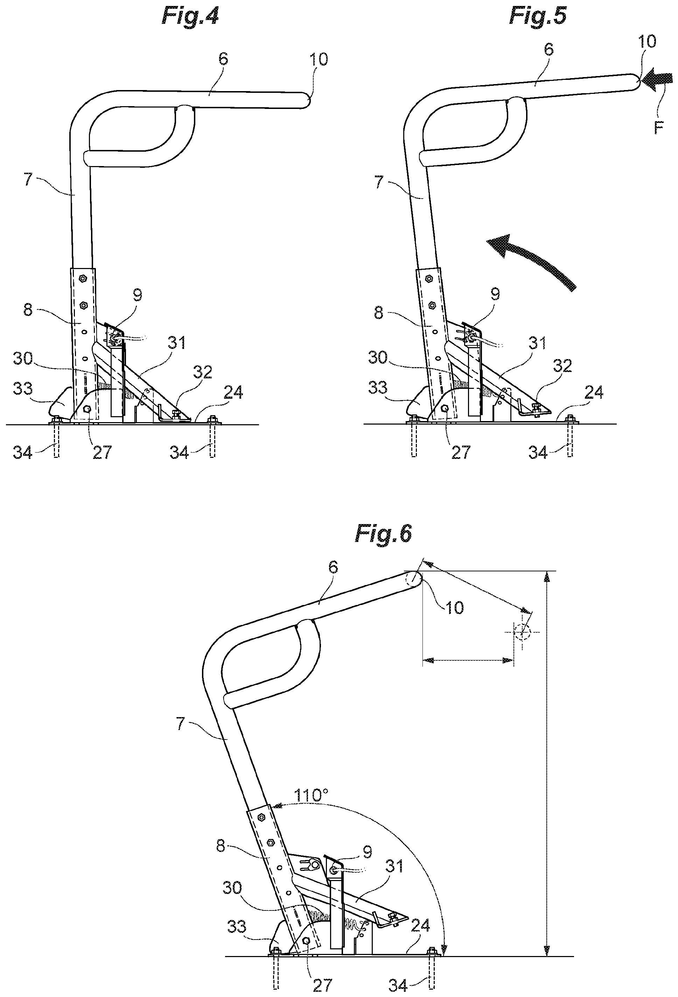

As is illustrated in Fig. 4, where the safety switch device 5 is shown from the side in an up-right position, the stepping surface 6 extend at a substantially right angle with respect to the support structure 7, typically at an angle of 90 degrees. The support structure 7 hereby extends substantially vertically, whereby the stepping surface 6 extends substantially horizontally, towards the rotary platform 1 from an upper end of the support structure 7.

In Fig. 5, the safety switch device 5 is shown from the side in a slightly inclined position and in Fig. 6, the safety switch device 5 is shown in a fully inclined position.

As is illustrated in Figs. 4-6, the horizontal pivot axis P of the support structure 7 is arranged at a horizontal distance from the rotary platform 1, which faces the front side 10 of the stepping surface 6 during operation, such that at least a major portion or in this case the entire stepping surface 6 is positioned closer to the rotary platform 1 in a horizontal direction than the horizontal pivot axis P, such that a weight acting on top of said stepping surface 6 will not provoke any pivotal motion of the support structure 7.

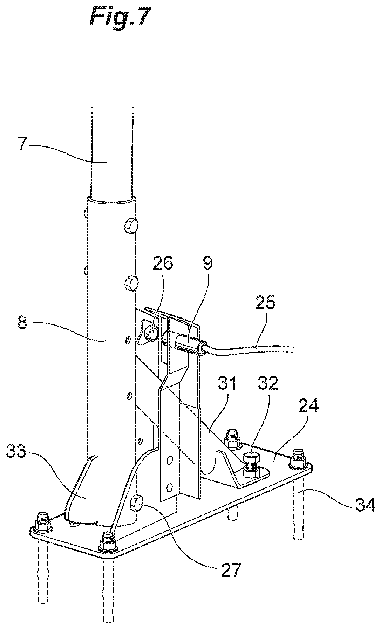

In Fig 7, the lower part 8 of the support structure 7 is shown in detail. As is illustrated the inductive proximity sensor device 9 is arranged to detect the presence of a sensor target 26, wherein the sensor 9 provides a signal as soon as the sensor target 26 is moved out of reach for the sensor 9 which may be set according to preferences by tuning the sensibility of the sensor. Also, in the shown embodiment the sensor is activated when the tilting of the support structure 7 reaches a certain tilting angle. The proximity sensor device 9 is connected to a control unit via an electric line 25 but may also be wirelessly connected to a control unit and provided with for instance a battery as a power source.

With reference to Figs. 5 and 6, the inductive proximity sensor device 9 is configured to activate the emergency stop at a tilting angle as illustrated in Fig. 5, which corresponds to about 5 degrees from the vertical direction. The sensor device may, however, also be set to activate the emergency stop at a tilting angle as illustrated in Fig. 6, which corresponds to an angle of about 20 degrees or to any angle therebetween. The tilting shown in Fig. 6 corresponds to a full tilting, wherein further tilting is blocked by a stopper 33 arranged at the lower part 8 of the support structure 7.

Further, as is illustrated in Figs. 4 and 5, a spring 30 may be arranged, preferably at the lower part 8 of the support structure 7, to act on the support structure 7 towards its up-right position as illustrated in Fig. 4. Hence, a certain (small) spring-force must hereby be overcome to tilt the safety switch device 5 backwards and activate the emergency stop. In this way, the spring 30 prevents dairy workers or anyone/anything else from accidentally knocking the safety switch device 5 over and thereby triggering an undesired emergency stop. Thus, the spring 30 avoids such accidental activations.

In the embodiment shown in Fig. 1 the stationary bridge 3 has an inclined side at the exit side 29 that corresponds to the inclined lateral side of the safety switch device 5 such that there will be no opening big enough for the dairy animal to step into the space between the stationary bridge 3 and the stepping surface 6 of the safety switch device 5. This may however not always be the case.

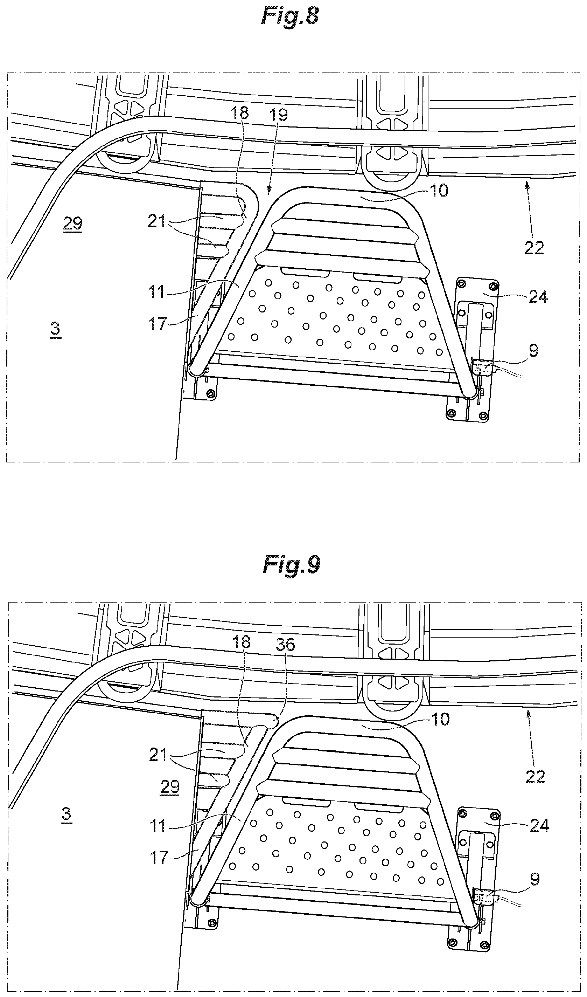

Namely, as is illustrated in the embodiments shown in Figs. 8 and 9, there may be a substantially right angle between the adjacent parts of the stationary bridge 3 and the rotary platform 1, such that there will be an open space 19 between the first lateral side 11 of the safety switch device 5 and the stationary bridge 3. This open space 19 may have a triangular shape that is widest close to the rotary platform 1 and decreases towards the very back of the stepping surface 6 of the safety switch device 5.

At such stationary bridge configurations, a bridge compensator 17 may be installed in the open space 19 formed between the stationary bridge 3 and the first lateral side 11 of the safety switch device 5, which bridge compensator 17 includes a stepping surface 18 for dairy animals exiting (or entering) the rotary platform 1 to make sure that the dairy animals will not step down into said space so as to avoid injuries of the dairy animal or other unwanted incidents.

The stepping surface 18 of the bridge compensator 17 may have a triangular shape so as to effectively cover the extension of the open space 19 between the stationary bridge 3 and the first lateral side 11 of the safety switch device 5. Specifically, the shape of the stepping surface 18 of the bridge compensator 17 may be individually shaped to cover the extension of the open space 19 between the stationary bridge 3 and the first lateral side 11 of the safety switch device 5 of a specific rotary milking parlour.

The stepping surface 18 of the bridge compensator 17 may comprise openings arranged to allow manure to pass by the bridge compensator 17, and specifically, the stepping surface 18 may include horizontal bars 21 arranged at distance from each other to allow manure to pass between them.

The openings that are arranged to allow manure to pass by the stepping surface 18 of the bridge compensator 17 and the stepping surface 6 of the safety switch device 5 are of course dimensioned so as to not allow a hoof of the dairy animal to pass into such an opening, e.g., between the bars that define the opening.

As seen shown in Fig. 9, the stepping surface 18 of the bridge compensator 17 in this embodiment comprises a corner edge 36 that extends a little bit further out from the inner corner that extends towards the front side 10 of the stepping surface 6 of the safety switch device 5. This is effective as the stepping surface 6 of the safety switch device 5 may have a rounded edge between the first lateral side 11 and the front side 10 of the stepping surface 6, which the corner edge 36 may fill to minimise the opening between the bridge compensator 17, the safety switch device 5 and the rotary platform 1. The corner edge 36 may formed in that one of the horizontal bars 21, specifically the horizontal bar closest to the rotary platform 1, extends longer than the form of a triangle with respect to the overall shape of the stepping surface 18 of the bridge compensator 17.

In the above, specific embodiments have been described. The scope of the invention is only limited by the appended claims.

## Claims

1. A safety arrangement for a rotary milking parlour comprising:
- a rotary platform (1) with a plurality of milking stalls (2),
- a stationary bridge (3) for allowing dairy animals to enter and exit the rotary platform before and after milking, and a gap (4) provided between the rotary platform (1) and the stationary bridge (3), wherein the safety arrangement comprises a safety switch device (5) configured to be positioned adjacent to the gap (4) and adjacent to both the rotary platform (1) and the stationary bridge (3) for protecting human operators and/or the dairy animals during operation of the rotary platform (1),
**characterised in that** the safety switch device (5) comprises
- a stepping surface (6) configured to support the dairy animals that accidentally step outside the rotary platform (1);
- a support structure (7) that carries the stepping surface (6) and is pivotally arranged about a pivot axis (P) at a lower part of the support structure (7), wherein the pivot axis (P) allows a pivotal movement about a horizontal axis so as to allow the support structure (7) with the stepping surface (6) to pivot away from the rotary platform (1) alongside the stationary bridge (3), and
wherein the safety arrangement further comprises a sensor device (9) arranged to activate an emergency stop of the rotary platform when a pivotal movement of the support structure (7) about the pivot axis (P) away from the rotary platform (1) is detected by the sensor device (9).

2. The safety arrangement according to claim 1, wherein the stepping surface (6) of the safety switch device (5) has
- a front side (10) for facing a circumferential edge (22) of the rotary platform (1),
- a first lateral side (11) arranged to face the stationary bridge (3),
- a second lateral side (12) opposed to the first lateral side (11),
wherein the second lateral side (12) is inclined so as to form an angle of less than 90 degrees, preferably in a range of 80 degrees to 60 degrees, with respect to an imaginary extension of the front side (10) as seen in a plane of the stepping surface (6).

3. The safety arrangement according to claim 2, wherein the front side (10) of the stepping surface (6) is arranged at a distance of less than 75 mm from the circumferential edge (22) of the rotary platform (1), preferably less than 55 mm.

4. The safety arrangement according to claim 2 or 3, wherein both the first lateral side (11) and the second lateral side (12) are inclined, as seen in the plane of the stepping surface (6), such that the front side (10) is narrower than a mid-portion (14) of the stepping surface (6).

5. The safety arrangement according to claim 4, wherein the stepping surface (6) is mirror-symmetrical in relation to a vertical mid-plane of the stepping surface (6), wherein the first lateral side (11) and the second lateral side (12) are inclined at the same angle, as seen in the plane of the stepping surface (6), in relation to an imaginary extension of the front side (10).

6. The safety arrangement according to any one of claims 2 to 5, further comprising a bridge compensator (17) arranged to be positioned on a lateral side of the stationary bridge (3) in a space (19) formed between the stationary bridge (3) and the first lateral side (11) of the stepping surface (6), which bridge compensator (17) comprises an auxiliary stepping surface (18) to support the dairy animals if accidentally stepping in said space (19).

7. The safety arrangement according to any one of claims 2-6, wherein the stepping surface (6) of the safety switch device (5) comprises openings (15) arranged at a front portion (20) of the stepping surface (6) adjacent the front side (10) thereof, to allow manure to pass by the stepping surface (6).

8. The safety arrangement according to claim 7, wherein the front portion (20) of the stepping surface (6) is formed of spaced apart horizontal bars (16).

9. The safety arrangement according to any one of the preceding claims, wherein a back portion (23) of the of the stepping surface (6), at a distance further away from the rotary platform (1) than the front portion (20), comprises a perforated steel plate, preferably a perforated friction steel plate.

10. The safety arrangement according to any one of the preceding claims, wherein the sensor device is a proximity sensor device (9), which comprises a sensor arranged to detect a sensor target (26), of which one of the sensor (9) and the sensor target (26) is stationary arranged at a base (24) of the safety switch device (5) and the other of the sensor (9) and the sensor target (26) is arranged on the support structure (7), wherein the support structure (7) is pivotally connected to the base (24) at a pivot joint (27) forming the pivot axis (P).

11. The safety arrangement according to any one of the preceding claims, wherein the pivot axis (P) of the support structure (7) is arranged at a horizontal distance from the rotary platform (1), and wherein at least a major portion of the stepping surface (6) is positioned closer to the rotary platform (1) in a horizontal direction than the pivot axis (P), such that a weight acting on top of said at least major portion of the stepping surface (6) will not provoke a pivotal motion of the support structure (7).

12. The safety arrangement according to claim 11, wherein the stepping surface (6) extends substantially horizontally towards the rotary platform (1) from an upper end of the support structure (7).

13. The safety arrangement according to claim 12, wherein the stepping surface (6) extend at a substantially right angle with respect to the support structure (7), and wherein the support structure (7) extends substantially vertically from a base (24) of the safety switch device (5).

14. A rotary milking parlour comprising:
- a rotary platform (1) with a plurality of milking stalls (2),
- a stationary bridge (3) for allowing dairy animals to enter and exit the rotary platform before and after milking, and a gap (4) provided between the rotary platform (1) and the stationary bridge (3), wherein a safety arrangement comprises a safety switch device (5) positioned adjacent to the gap (4) and adjacent to both the rotary platform (1) and the stationary bridge (3) for protecting humans and/or the dairy animals during operation of the rotary platform (1), **characterised in that** the rotary milking parlour comprises the safety arrangement with the safety switch device (5) according to any one of the preceding claims.

15. The milking parlour according to claim 14, wherein the stationary bridge (3) comprises an entry side (28) arranged to allow entry of the dairy animals to the rotary platform (1) and an exit side for allowing exiting of the dairy animals from the rotary platform (1), and wherein the safety switch device (5) is arranged adjacent to the exit side (29) of the stationary bridge (3).

## Patentansprüche

1. Sicherheitsanordnung für ein Melkkarussell, umfassend:
- eine Drehplattform (1) mit einer Vielzahl von Melkständen (2),
- eine stationäre Brücke (3), um es Milchtieren zu ermöglichen, die Drehplattform vor und nach dem Melken zu betreten und zu verlassen, und einen Spalt (4), der zwischen der Drehplattform (1) und der stationären Brücke (3) bereitgestellt ist, wobei die Sicherheitsanordnung eine Sicherheitsschaltervorrichtung (5) umfasst, die konfiguriert ist, um angrenzend an den Spalt (4) und angrenzend an sowohl die Drehplattform (1) als auch die stationäre Brücke (3) positioniert zu werden, zum Schützen menschlicher Bediener und/oder der Milchtiere während des Betriebs der Drehplattform (1), **dadurch gekennzeichnet, dass** die Sicherheitsschaltervorrichtung (5) umfasst
- eine Trittoberfläche (6), die konfiguriert ist, um die Milchtiere zu stützen, die versehentlich außerhalb der Drehplattform (1) treten;
- eine Stützstruktur (7), die die Trittoberfläche (6) trägt und um eine Schwenkachse (P) herum an einem unteren Teil der Stützstruktur (7) schwenkbar angeordnet ist, wobei die Schwenkachse (P) eine Schwenkbewegung um eine horizontale Achse herum ermöglicht, um der Stützstruktur (7) mit der Trittoberfläche (6) zu ermöglichen, von der Drehplattform (1) weg entlang der stationären Brücke (3) zu schwenken, und
wobei die Sicherheitsanordnung ferner eine Sensorvorrichtung (9) umfasst, die angeordnet ist, einen Nothalt der Drehplattform zu aktivieren, wenn eine Schwenkbewegung der Stützstruktur (7) um die Schwenkachse (P) herum weg von der Drehplattform (1) durch die Sensorvorrichtung (9) erfasst wird.

2. Sicherheitsanordnung nach Anspruch 1, wobei die Trittoberfläche (6) der Sicherheitsschaltervorrichtung (5) aufweist
- eine Vorderseite (10), die einer umlaufenden Kante (22) der Drehplattform (1) zugewandt ist,
- eine erste laterale Seite (11), die angeordnet ist, um der stationären Brücke (3) zugewandt zu sein,
- eine zweite laterale Seite (12), die der ersten lateralen Seite (11) gegenüberliegt,
wobei die zweite laterale Seite (12) geneigt ist, um einen Winkel von weniger als 90 Grad, vorzugsweise in einem Bereich von 80 Grad bis 60 Grad, in Bezug auf eine gedachte Verlängerung der Vorderseite (10), wie gesehen in einer Ebene der Trittoberfläche (6), auszubilden.

3. Sicherheitsanordnung nach Anspruch 2, wobei die Vorderseite (10) der Trittoberfläche (6) in einem Abstand von weniger als 75 mm von der umlaufenden Kante (22) der Drehplattform (1) angeordnet ist, vorzugsweise weniger als 55 mm.

4. Sicherheitsanordnung nach Anspruch 2 oder 3, wobei sowohl die erste laterale Seite (11) als auch die zweite laterale Seite (12) derart geneigt sind, wie gesehen in der Ebene der Trittoberfläche (6), dass die Vorderseite (10) schmaler als ein Mittelabschnitt (14) der Trittoberfläche (6) ist.

5. Sicherheitsanordnung nach Anspruch 4, wobei die Trittoberfläche (6) in Beziehung zu einer vertikalen Mittelebene der Trittoberfläche (6) spiegelsymmetrisch ist, wobei die erste laterale Seite (11) und die zweite laterale Seite (12) in dem gleichen Winkel, wie gesehen in der Ebene der Trittoberfläche (6), in Beziehung zu einer gedachten Verlängerung der Vorderseite (10) geneigt sind.

6. Sicherheitsanordnung nach einem der Ansprüche 2 bis 5, ferner umfassend einen Brückenkompensator (17), der angeordnet ist, um an einer lateralen Seite der stationären Brücke (3) in einem Raum (19) positioniert zu werden, der zwischen der stationären Brücke (3) und der ersten lateralen Seite (11) der Trittoberfläche (6) ausgebildet ist, wobei der Brückenkompensator (17) eine Hilfstrittoberfläche (18) umfasst, um die Milchtiere zu stützen, falls sie versehentlich in den Raum (19) treten.

7. Sicherheitsanordnung nach einem der Ansprüche 2 bis 6, wobei die Trittoberfläche (6) der Sicherheitsschaltervorrichtung (5) Öffnungen (15) umfasst, die an einem Vorderabschnitt (20) der Trittoberfläche (6) angrenzend an deren Vorderseite (10) angeordnet sind, um zu ermöglichen, dass Mist die Trittoberfläche (6) passiert.

8. Sicherheitsanordnung nach Anspruch 7, wobei der Vorderabschnitt (20) der Trittoberfläche (6) aus beabstandeten horizontalen Stäben (16) ausgebildet ist.

9. Sicherheitsanordnung nach einem der vorstehenden Ansprüche, wobei ein Hinterabschnitt (23) der Trittoberfläche (6) in einem größeren Abstand von der Drehplattform (1) als der Vorderabschnitt (20) eine perforierte Stahlplatte, vorzugsweise eine perforierte Reibstahlplatte, umfasst.

10. Sicherheitsanordnung nach einem der vorstehenden Ansprüche, wobei die Sensorvorrichtung eine Näherungssensorvorrichtung (9) ist, die einen Sensor umfasst, der angeordnet ist, um ein Sensorziel (26) zu erfassen, wobei eines von dem Sensor (9) und dem Sensorziel (26) stationär an einer Basis (24) der Sicherheitsschaltervorrichtung (5) angeordnet ist und das andere von dem Sensor (9) und dem Sensorziel (26) an der Stützstruktur (7) angeordnet ist, wobei die Stützstruktur (7) an einem Schwenkgelenk (27), das die Schwenkachse (P) ausbildet, schwenkbar mit der Basis (24) verbunden ist.

11. Sicherheitsanordnung nach einem der vorstehenden Ansprüche, wobei die Schwenkachse (P) der Stützstruktur (7) in einem horizontalen Abstand von der Drehplattform (1) angeordnet ist, und wobei mindestens ein Hauptteil der Trittoberfläche (6) in einer horizontalen Richtung derart näher an der Drehplattform (1) als die Schwenkachse (P) positioniert ist, dass ein Gewicht, das oben auf den mindestens Hauptteil der Trittoberfläche (6) einwirkt, keine Schwenkbewegung der Stützstruktur (7) hervorruft.

12. Sicherheitsanordnung nach Anspruch 11, wobei sich die Trittoberfläche (6) in Richtung der Drehplattform (1) von einem oberen Ende der Stützstruktur (7) im Wesentlichen horizontal erstreckt.

13. Sicherheitsanordnung nach Anspruch 12, wobei sich die Trittoberfläche (6) in einem im Wesentlichen rechten Winkel in Bezug auf die Stützstruktur (7) erstreckt, und wobei sich die Stützstruktur (7) im Wesentlichen vertikal von einer Basis (24) der Sicherheitsschaltervorrichtung (5) erstreckt.

14. Melkkarussell, umfassend:
- eine Drehplattform (1) mit einer Vielzahl von Melkständen (2),
- eine stationäre Brücke (3), um es Milchtieren zu ermöglichen, die Drehplattform vor und nach dem Melken zu betreten und zu verlassen, und einen Spalt (4), der zwischen der Drehplattform (1) und der stationären Brücke (3) bereitgestellt ist, wobei eine Sicherheitsanordnung eine Sicherheitsschaltervorrichtung (5) umfasst, die angrenzend an den Spalt (4) und angrenzend an sowohl die Drehplattform (1) als auch an die stationäre Brücke (3) positioniert ist, zum Schützen von Menschen und/oder der Milchtiere während des Betriebs der Drehplattform (1), **dadurch gekennzeichnet, dass** das Melkkarussell die Sicherheitsanordnung mit der Sicherheitsschaltervorrichtung (5) nach einem der vorstehenden Ansprüche umfasst.

15. Melkanlage nach Anspruch 14, wobei die stationäre Brücke (3) eine Eintrittsseite (28), die angeordnet ist, um den Eintritt der Milchtiere auf die Drehplattform (1) zu ermöglichen, und eine Austrittsseite, um den Milchtieren zu ermöglichen, die Drehplattform (1) zu verlassen, und wobei die Sicherheitsschaltervorrichtung (5) angrenzend an die Austrittsseite (29) der stationären Brücke (3) angeordnet ist.

## Revendications

1. Agencement de sécurité destiné à une salle de traite rotative comprenant :
- une plate-forme rotative (1) avec une pluralité de stalles de traite (2),
- un pont stationnaire (3) destiné à permettre à des animaux laitiers d'entrer dans, et de sortir de, la plate-forme rotative avant et après la traite, et un espacement (4) fourni entre la plate-forme rotative (1) et le pont stationnaire (3), dans lequel l'agencement de sécurité comprend un dispositif de commutation de sécurité (5) conçu pour être positionné adjacent à l'espacement (4) et adjacent à la fois à la plate-forme rotative (1) et au pont stationnaire (3) pour la protection d'opérateurs humains et/ou des animaux laitiers pendant le fonctionnement de la plate-forme rotative (1), **caractérisé en ce que** le dispositif de commutation de sécurité (5) comprend
- une surface marchepied (6) conçue pour supporter les animaux laitiers qui marchent accidentellement à l'extérieur de la plate-forme rotative (1) ;
- une structure de support (7) qui porte la surface marchepied (6) et est agencée de manière pivotante autour d'un axe de pivotement (P) au niveau d'une partie inférieure de la structure de support (7), dans lequel l'axe de pivotement (P) permet un mouvement pivotant autour d'un axe horizontal de façon à permettre à la structure de support (7) avec la surface marchepied (6) de pivoter à l'écart de la plate-forme rotative (1) à côté du pont stationnaire (3), et
dans lequel l'agencement de sécurité comprend en outre un dispositif capteur (9) agencé pour activer un arrêt d'urgence de la plate-forme rotative lorsqu'un mouvement pivotant de la structure de support (7) autour de l'axe de pivotement (P) à l'écart de la plate-forme rotative (1) est détecté par le dispositif capteur (9).

2. Agencement de sécurité selon la revendication 1, dans lequel la surface marchepied (6) du dispositif de commutation de sécurité (5) a
- un côté avant (10) destiné à faire face vers un bord circonférentiel (22) de la plate-forme rotative (1),
- un premier côté latéral (11) agencé pour faire face vers le pont stationnaire (3),
- un second côté latéral (12) opposé au premier côté latéral (11),
dans lequel le second côté latéral (12) est incliné de façon à former un angle inférieur à 90 degrés, de préférence dans une plage de 80 degrés à 60 degrés, par rapport à une extension imaginaire du côté avant (10) comme on l'observe dans un plan de la surface marchepied (6).

3. Agencement de sécurité selon la revendication 2, dans lequel le côté avant (10) de la surface marchepied (6) est agencé à une distance inférieure à 75 mm du bord circonférentiel (22) de la plate-forme rotative (1), de préférence inférieure à 55 mm.

4. Agencement de sécurité selon la revendication 2 ou 3, dans lequel tant le premier côté latéral que le second côté latéral (12) sont inclinés, comme on l'observe dans le plan de la surface marchepied (6), de telle sorte que le côté avant (10) est plus étroit qu'une partie médiane (14) de la surface marchepied (6).

5. Agencement de sécurité selon la revendication 4, dans lequel la surface marchepied (6) présente une symétrie miroir par rapport à un plan médian vertical de la surface marchepied (6), dans lequel le premier côté latéral (11) et le second côté latéral (12) sont inclinés selon le même angle, comme on l'observe dans le plan de la surface marchepied (6), par rapport à une extension imaginaire du côté avant (10).

6. Agencement de sécurité selon l'une quelconque des revendications 2 à 5, comprenant en outre un compensateur de pont (17) agencé pour être positionné sur un côté latéral du pont stationnaire (3) dans un espace (19) formé entre le pont stationnaire (3) et le premier côté latéral (11) de la surface marchepied (6), ce compensateur de pont (17) comprenant une surface marchepied auxiliaire (18) pour supporter les animaux laitiers s'ils marchent accidentellement dans ledit espace (19).

7. Agencement de sécurité selon l'une quelconque des revendications 2 à 6, dans lequel la surface marchepied (6) du dispositif de commutation de sécurité (5) comprend des ouvertures (15) agencées au niveau d'une partie avant (20) de la surface marchepied (6) adjacente au côté avant (10) de celle-ci, pour permettre à du lisier de passer par la surface marchepied (6).

8. Agencement de sécurité selon la revendication 7, dans lequel la partie avant (20) de la surface marchepied (6) est formée de barres horizontales (16) espacées.

9. Agencement de sécurité selon l'une quelconque des revendications précédentes, dans lequel une partie arrière (23) de la surface marchepied (6), à une distance plus éloignée de la plate-forme rotative (1) que la partie avant (20), comprend une tôle d'acier perforée, de préférence une tôle d'acier à friction perforée.

10. Agencement de sécurité selon l'une quelconque des revendications précédentes, dans lequel le dispositif capteur est un dispositif capteur de proximité (9), qui comprend un capteur agencé pour détecter une cible de capteur (26), dont l'un du capteur (9) et de la cible de capteur (26) est agencé stationnaire au niveau d'une base (24) du dispositif de commutation de sécurité (5) et l'autre du capteur (9) et de la cible de capteur (26) est agencé sur la structure de support (7), dans lequel la structure de support (7) est reliée en relation pivotante avec la base (24) au niveau d'une articulation rotoïde (27) formant l'axe de pivotement (P).

11. Agencement de sécurité selon l'une quelconque des revendications précédentes, dans lequel l'axe de pivotement (P) de la structure de support (7) est agencé à une distance horizontale de la plate-forme rotative (1), et dans lequel au moins une majeure partie de la surface marchepied (6) est positionnée plus près de la plate-forme rotative (1) dans une direction horizontale que l'axe de pivotement (P), de telle sorte qu'un poids agissant sur la partie supérieure de ladite au moins une majeure partie de la surface marchepied (6) ne provoquera pas de mouvement pivotant de la structure de support (7).

12. Agencement de sécurité selon la revendication 11, dans lequel la surface marchepied (6) s'étend de façon sensiblement horizontale en direction de la plate-forme rotative (1) à partir d'une extrémité supérieure de la structure de support (7).

13. Agencement de sécurité selon la revendication 12, dans lequel la surface marchepied (6) s'étend selon un angle sensiblement droit par rapport à la structure de support (7), et dans lequel la structure de support (7) s'étend de façon sensiblement verticale à partir d'une base (24) du dispositif de commutation de sécurité (5).

14. Salle de traite rotative comprenant :
- une plate-forme rotative (1) avec une pluralité de stalles de traite (2),
- un pont stationnaire (3) destiné à permettre à des animaux laitiers d'entrer dans, et de sortir de, la plate-forme rotative avant et après la traite, et un espacement (4) fourni entre la plate-forme rotative (1) et le pont stationnaire (3), dans laquelle un agencement de sécurité comprend un dispositif de commutation de sécurité (5) positionné adjacent à l'espacement (4) et adjacent à la fois à la plate-forme rotative (1) et au pont stationnaire (3) pour la protection d'humains et/ou des animaux laitiers pendant le fonctionnement de la plate-forme rotative (1), **caractérisée en ce que** la salle de traite rotative comprend l'agencement de sécurité avec le dispositif de commutation de sécurité (5) selon l'une quelconque des revendications précédentes.

15. Salle de traite selon la revendication 14, dans laquelle le pont stationnaire (3) comprend un côté d'entrée (28) agencé pour permettre l'entrée des animaux laitiers vers la plate-forme rotative (1) et un côté de sortie destiné à permettre la sortie des animaux laitiers de la plate-forme rotative (1), et dans laquelle le dispositif de commutation de sécurité (5) est agencé adjacent au côté de sortie (29) du pont stationnaire (3).
